# EUROPÄISCHE PATENTSCHRIFT

(11) **EP 2 842 781 B1**
(45) Veröffentlichungstag und Bekanntmachung des Hinweises auf die Patenterteilung: **13.04.2016**
(21) Anmeldenummer: 14179817.3
(22) Anmeldetag: 05.08.2014
(51) Int. Cl.: B60K 6/365, B60K 6/48, B60K 6/387

(54) **GETRIEBEANORDNUNG FÜR EIN KRAFTFAHRZEUG**
DRIVE ASSEMBLY FOR A MOTOR VEHICLE
SYSTÈME D'ENGRENAGE POUR UN VÉHICULE AUTOMOBILE

(30) Priorität: 21.08.2013 DE 102013216554
(43) Veröffentlichungstag der Anmeldung: 04.03.2015
(73) Patentinhaber: Volkswagen Aktiengesellschaft, 38440 Wolfsburg (DE)
(72) Erfinder: Meißner, Christian, 38122 Braunschweig (DE); Schröder, Hendrik, 38122 Braunschweig (DE)

(56) Entgegenhaltungen:
- DE-A1-102005 001 527
- DE-A1-102005 022 011
- DE-A1-102011 005 531
- US-A1- 2006 105 876
- US-A1- 2007 145 749
- US-B1- 6 592 484

## Beschreibung

Die Erfindung bezieht sich auf eine Getriebeanordnung für ein Kraftfahrzeug, welches zwei Antriebsaggregate, nämlich eine Verbrennungskraftmaschine und eine elektrische Maschine aufweist. Derartige Antriebe sind allgemein als Hybridantriebe bekannt.

Zur Reduzierung der CO₂-Emissionen gewinnen Hybridantriebe für Kraftfahrzeuge immer stärkere Bedeutung. Typischerweise wird dabei ein konventioneller Antriebsstrang mit einer Verbrennungskraftmaschine und einem 6- oder 7-Ganggetriebe verwendet, der um eine elektrische Maschine erweitert ist. Bei einem geringen Elektrifizierungsgrad, d.h. bei vergleichsweise schwacher elektrischer Maschine, die meist nach dem Prinzip des Parallelhybrid für reine Unterstützungszwecke eingesetzt wird, ist dieser Ansatz sinnvoll. Im Hinblick auf sich ständig verbessernde Batterietechnologie und daraus resultierende höhere Elektrifizierungsgrade bei Hybridantrieben können andere Antriebskonzepte als das Parallelhybrid-Konzept unter bestimmten Randbedingungen weitere Potentiale ausschöpfen.

Als Alternativen zum Parallelhybrid sind der sogenannte serielle Hybrid, bei dem die Verbrennungskraftmaschine vor allem als Range-Extender eines Elektrofahrzeugs dient, sowie der leistungsverzweigte Hybridantrieb, der neben der Verbrennungskraftmaschine zwei elektrische Maschinen erfordert, bekannt.

Für schwere, antriebsstarke Fahrzeuge der Oberklasse sind bislang jedoch keine im Hinblick auf Leistung und Komfort befriedigende Hybridkonzepte realisiert worden.

Aus der gattungsgemäßen US 2007/0145749 A1 ist eine Getriebeanordnung für ein Kraftfahrzeug bekannt, welches zwei Antriebsaggregate, nämlich eine Verbrennungskraftmaschine und eine elektrische Maschine aufweist. Die Getriebeanordnung umfasst ein Getriebegehäuse, eine mit der Kurbelwelle der Verbrennungskraftmaschine verbundene Motoreingangswelle, eine mit dem Rotor der elektrischen Maschine koppelbare Elektromaschineneingangswelle und und eine mit Antriebsrädern des Kraftfahrzeugs koppelbare Abtriebswelle sowie ein reduziertes Planetengetriebe mit fünf Wellen. Die Wellen sind: eine über eine erste Kupplung mit der Elektromaschineneingangswelle gekoppelte erste Eingangswelle, eine über eine zweite Kupplung mit der Elektromaschineneingangswelle gekoppelte zweite Eingangswelle, eine mit der Motoreingangswelle verbundene dritten Eingangswelle, eine über eine erste Bremse mit dem Getriebegehäuse gekoppelte Abstützwelle und eine mit der Abtriebswelle verbundene Ausgangswelle. Die erste und die zweite Eingangswellen können über zwei weitere Kupplungen mit dem Gehäuse gekoppelt werden. Alle genannten Kupplungen sind separate Reibkupplungen, was extrem raumbeanspruchend und sehr kostenintensiv ist.

Aus der US 2006/0105876 A1 ist eine Getriebestruktur mit zwei identischen Getriebeanordnungen mit je einer E-Maschine und je einer mit dem Verbrennungsmotor verbundenen Eingangswelle, einer Ausgangswelle und zwei mit dem Gehäuse verbundenen Abstützwellen bekannt. Die Eingangswelle, die Ausgangswelle und die zwei Abstützwellen können mittels Verschieben eines mit Verbindungverzahnung versehenen einfachen dreiwelligen Planetenradsatzes miteinander auf unterschiedliche Weise gekoppelt werden. Die Ausgangswelle ist mit der E-Maschine verbunden.

Es ist die Aufgabe der vorliegenden Erfindung, ein verbessertes Hybrid-Antriebskonzept, insbesondere auch für schwere, leistungsstarke Fahrzeuge der Oberklasse zur Verfügung zu stellen, welches kleineres Bauraumbedarf hat und einfacher und effizienter konstruiert ist.

Diese Aufgabe wird durch eine Getriebeanordnung mit den Merkmalen von Anspruch 1 gelöst.

Bevorzugte Ausführungsformen der Erfindung sind Gegenstand der abhängigen Patentansprüche.

Der Erfindung liegt zunächst die Erkenntnis zugrunde, dass im Hinblick auf die große Variabilität starker elektrischer Maschinen die frühere Tendenz zu immer mehr Gängen zur Realisierung optimierter Betriebspunkte überholt ist. Die erfindungsgemäße Getriebeanordnung stellt vielmehr, insbesondere in ihrer bevorzugten Ausführungsform, bei der die zweite Eingangswelle über eine zweite Bremse mit dem Getriebegehäuse gekoppelt ist, lediglich drei mechanische Gänge, drei elektrische Gänge und zwei stufenlose Fahrbereiche zur Verfügung. Dies ist bei hinreichend stark dimensionierter elektrischer Maschine auch für Fahrzeuge der Oberklasse vollkommen ausreichend. Ein besonderer Vorteil wird dabei dadurch erzielt, dass im Gegensatz zu leistungsverzweigten Hybridkonzepten keine zweite elektrische Maschine erforderlich ist, was im Hinblick auf Gewicht und Bauraum von erheblicher Bedeutung ist. Bevor auf die Funktion der einzelnen Elemente der erfindungsgemäßen Getriebeanordnung eingegangen wird, sei darauf hingewiesen, dass die als erste Kupplung, zweite Kupplung und zweite Bremse bezeichneten Schaltelemente lediglich ihrer Funktion nach, nicht konstruktiv als separate Elemente realisiert sind. So ist etwa bei der Erfindung vorgesehen, dass die erste Kupplung, die zweite Kupplung und die zweite Bremse in einem gemeinsamen Multi-Schaltelement mit sequentiell durchfahrbaren Schaltstellungen integriert sind. Ein derartiges Multi-Schaltelement hat gegenüber separaten Einzelelementen den Vorteil eines geringen Bauraumbedarfs. Der grundsätzliche Nachteil eines solchen Multi-Schaltelementes, nämlich dass die einzelnen Schaltstellungen nicht beliebig, sondern lediglich in vorgegebener Reihenfolge, d.h. sequentiell, angesteuert werden können, ist im vorliegenden Fall aufgrund der besonderen Getriebestruktur ohne Belang. Es sind vier sequentiell ansteuerbare Schaltstellungen realisiert.

Der Anfahrvorgang erfolgt typischerweise elektrisch, wobei die erste Kupplung und die erste Bremse geschlossen sind, wohingegen die übrigen Schaltelemente geöffnet sind. Dies bedeutet, dass der Rotor der elektrischen Maschine drehmomentübertragend mit der ersten Eingangswelle des reduzierten Planetengetriebes verbunden und die Abstützwelle über die erste Bremse am Getriebegehäuse festgelegt ist. Nach separatem Start der Verbrennungskraftmaschine und Drehzahlsynchronisation an der Hauptkupplung kann diese geschlossen und somit der erste mechanische Gang eingelegt werden. Durch Öffnen der ersten Bremse kann in den ersten stufenlosen Fahrbereich eingetreten werden, bei dem die Verbrennungskraftmaschine bei optimiertem Betriebspunkt arbeitet und die Drehzahl an der Abtriebswelle durch entsprechende Ansteuerung der elektrischen Maschine nach Art eines leistungsverzweigten Hybriden eingestellt wird. Durch Schließen der zweiten Kupplung wird auch die zweite Eingangswelle des reduzierten Planetengetriebes mit der Elektromaschineneingangswelle verbunden, sodass die erste und die zweite Eingangswelle des reduzierten Planetengetriebes zusammengeschaltet sind und dieses als Block umläuft. Auch die mit der Motoreingangswelle verbundene dritte Eingangswelle des reduzierten Planetengetriebes läuft mit gleicher Drehzahl um, sodass sich auch an der Abtriebswelle die gleiche Drehzahl einstellt. Es ergibt sich ein leistungsorientierter zweiter verbrennungsmotorischer Gang mit parallelhybrider Unterstützung durch die elektrische Maschine.

In diesem Zustand kann durch Öffnen der ersten Kupplung, d.h. Freigabe der ersten Eingangswelle des reduzierten Planetengetriebes in den zweiten stufenlosen Fahrbereich übergegangen werden. In diesem Betriebszustand sind die Drehmomente des Verbrennungsmotors und der elektrischen Maschine jedoch einander entgegengesetzt, sodass dieser Betriebszustand in der Regel vorrangig zu einem weiteren Wechsel in einen dritten verbrennungsmotorischen Gang genutzt wird, bei dem besonders effizient gefahren werden kann. Dieser Übergang erfolgt bevorzugt durch Festlegung der Abstützwelle am Getriebegehäuse durch Schließen der zweiten Bremse.

Einen Sonderfall stellt der Fahrbetrieb im ersten stufenlosen Fahrbereich bei stillstehender elektrischer Maschine dar. Bis auf die Abstützung des Drehmomentes der Verbrennungskraftmaschine findet hier keine elektrische Leistungsaufnahme oder -abgabe der elektrischen Maschine statt. Die Gesamtübersetzung zwischen der Verbrennungskraftmaschine und dem Abtrieb liegt zwischen derjenigen des ersten und zweiten verbrennungsmotorischen Ganges. Es wird somit ein Zwischengang repräsentiert, der auch bei weitgehend leeren elektrischen Energiespeichern eine vergleichsweise engstufige Schaltung der verbrennungsmotorischen Gänge erlaubt.

Außer den beschriebenen Fahrzuständen stellt die erfindungsgemäße Getriebeanordnung noch zwei weitere elektrische Gänge größeren Drehmomentes zur Verfügung, die beispielsweise beim Anfahren am Berg mit Anhänger oder beim Rangieren zum Tragen kommen können. Der besonders drehmomentstarke erste elektrische Gang wird durch Abstützen der Abstützwelle am Getriebegehäuse, d.h. durch Schließen der ersten Bremse bei mit der zweiten Eingangswelle des reduzierten Planetengetriebes gekoppelter Elektromaschineneingangswelle, d.h. bei geschlossener zweiter Kupplung, und im Übrigen geöffneten Schaltelementen realisiert. Der zweite elektrische Gang wird durch Zusammenschaltung der ersten und zweiten Eingangswelle des reduzierten Planetengetriebes mit der Elektromaschineneingangswelle und im Übrigen geöffneten Schaltelementen realisiert.

Um die vorgenannten Gänge in der beschriebenen Reihenfolge, welche die einzig sinnvolle ist, durchfahren zu können, ist das zuvor bereits erwähnte Multi-Schaltelement vorzugsweise so ausgerichtet, dass die vier Schaltstellungen bidirektional in der folgenden, funktionalen Reihenfolge durchfahrbar sind:
- erste Kupplung zu, zweite Kupplung offen und zweite Bremse offen,
- erste Kupplung zu, zweite Kupplung zu und zweite Bremse offen,
- erste Kupplung offen, zweite Kupplung zu und zweite Bremse offen,
- erste Kupplung offen, zweite Kupplung zu und zweite Bremse zu.

Die erste Bremse ist unabhängig davon betätigbar. Aufgrund der lediglich sequentiellen Ansteuerung der unterschiedlichen Schaltstellungen, die jeweils bei Drehzahlgleichheit der zu koppelnden Elemente erfolgt, können, wie bevorzugt vorgesehen, die erste Kupplung, die zweite Kupplung und die zweite Bremse als formschlüssige Schaltelemente ausgebildet sein. Insbesondere lässt sich ein solch formschlüssiges Multi-Schaltelement durch eine axial verschiebbare Schalthülse realisieren, die über axial gestaffelt angeordnete Schalträder geschoben wird.

Hinsichtlich der konkreten Ausgestaltung des reduzierten Planetengetriebes lässt sich die Erfindung konstruktiv auf unterschiedliche Weise umsetzen. Unter einem reduzierten Planetengetriebe versteht man allgemein ein Planetengetriebe, bei dem sich der bauliche Aufwand gegenüber einer Realisierung mit einer Mehrzahl einfacher Planetenradsätze insofern "reduziert", als funktionale Elemente der einzelnen einfachen Planetenradsätze konstruktiv zusammengefasst werden.

Bei einer ersten bevorzugten Ausführungsform ist vorgesehen, dass das reduzierte Planetengetriebe
- eine mit der ersten Eingangswelle verbundene, erste Sonne,
- eine mit der zweiten Eingangswelle verbundene, zweite Sonne,
- eine mit der dritten Eingangswelle verbundene, dritte Sonne,
- einen mit der Abstützwelle verbundenen Steg und
- ein mit der Ausgangswelle gekoppeltes Hohlrad,
aufweist,
wobei auf dem Steg
- ein mit dem Hohlrad und der ersten Sonne kämmender Satz Langplaneten,
- ein mit dem Satz Langplaneten und der zweiten Sonne kämmender Satz erster Kurzplaneten und
- ein mit dem Satz Langplaneten und der dritten Sonne kämmender Satz zweiter Kurzplaneten
gelagert ist.

Die drei Sonnenwellen bilden somit die drei Eingangswellen; die Welle des Hohlrades bildet die Ausgangswelle; die Abstützung am Gehäuse über die erste Bremse erfolgt über den Steg. Diese Ausführungsform ist aufgrund ihrer konstruktiven Einfachheit besonders bevorzugt.

Eine andere Variante bei der ebenfalls der Abtrieb über ein Hohlrad erfolgt, zeichnet sich dadurch aus, dass das reduzierte Planetengetriebe
- ein mit der ersten Eingangswelle verbundenes, erstes Hohlrad,
- eine mit der zweiten Eingangswelle verbundene, erste Sonne,
- einen mit der dritten Eingangswelle verbundenen Steg,
- eine mit der Abstützwelle verbundene, zweite Sonne und
- ein mit der Ausgangswelle verbundenes, zweites Hohlrad
aufweist,
wobei auf dem Steg
- ein mit seinen kleineren Planetenstufen mit der zweiten Sonne und mit seinen größeren Planetenstufen mit der ersten Sonne und dem ersten Hohlrad kämmender Satz Stufenplaneten sowie
- ein mit den kleineren Planetenstufen des Satzes von Stufenplaneten und mit dem zweiten Hohlrad kämmender Satz Kurzplaneten
gelagert ist.

Bei anderen Varianten wird das Drehmoment der Verbrennungskraftmaschine über ein Hohlrad eingeleitet, wohingegen der Steg mit der Ausgangswelle, d.h. mit dem Abtrieb gekoppelt ist. So ist bei einer ersten Ausführungsform dieser Variante vorgesehen, dass das reduzierte Planetengetriebe
- eine mit der ersten Eingangswelle verbundene, erste Sonne,
- eine mit der zweiten Eingangswelle verbundene, zweite Sonne,
- ein mit der dritten Eingangswelle verbundenes, erstes Hohlrad,
- ein mit der Abstützwelle verbundenes, zweites Hohlrad und
- einen mit der Ausgangswelle verbundenen Steg
aufweist,
wobei auf dem Steg
- ein mit der zweiten Sonne und dem zweiten Hohlrad kämmender Satz Langplaneten und
- ein mit dem Satz Langplaneten sowie mit der ersten Sonne und dem ersten Hohlrad kämmender Satz Kurzplaneten
gelagert ist.

Alternativ hierzu besteht auch die Möglichkeit, dass das reduzierte Planetengetriebe
- ein mit der ersten Eingangswelle verbundenes, erstes Hohlrad,
- eine mit der zweiten Eingangswelle verbundene, erste Sonne,
- ein mit der dritten Eingangswelle verbundenes, zweites Hohlrad,
- eine mit der Abstützwelle verbundene, zweite Sonne und
- einen mit der Ausgangswelle verbundenen Steg
aufweist,
wobei auf dem Steg
- ein mit der ersten Sonne und dem ersten Hohlrad kämmender Satz Langplaneten und
- ein mit dem Satz Langplaneten sowie mit der zweiten Sonne und dem zweiten Hohlrad kämmender Satz Kurzplaneten
gelagert ist.

Weitere Merkmale und Vorteile der Erfindung ergeben sich aus der nachfolgenden, speziellen Beschreibung und den Zeichnungen.

Es zeigen:
- Figur 1: eine erste Ausführungsform einer erfindungsgemäßen Getriebeanordnung,
- Figur 2: eine zweite Ausführungsform einer erfindungsgemäßen Getriebeanordnung,
- Figur3: eine dritte Ausführungsform einer erfindungsgemäßen Getriebeanordnung,
- Figur 4: eine vierte Ausführungsform einer erfindungsgemäßen Getriebeanordnung,
- Figur 5: das Multi-Schaltelement der Getriebeanordnungen der Figuren 1 bis 4 in seinen vier Schaltstellungen.

Gleiche Bezugszeichen in den Figuren weisen auf gleiche oder analoge Elemente hin.

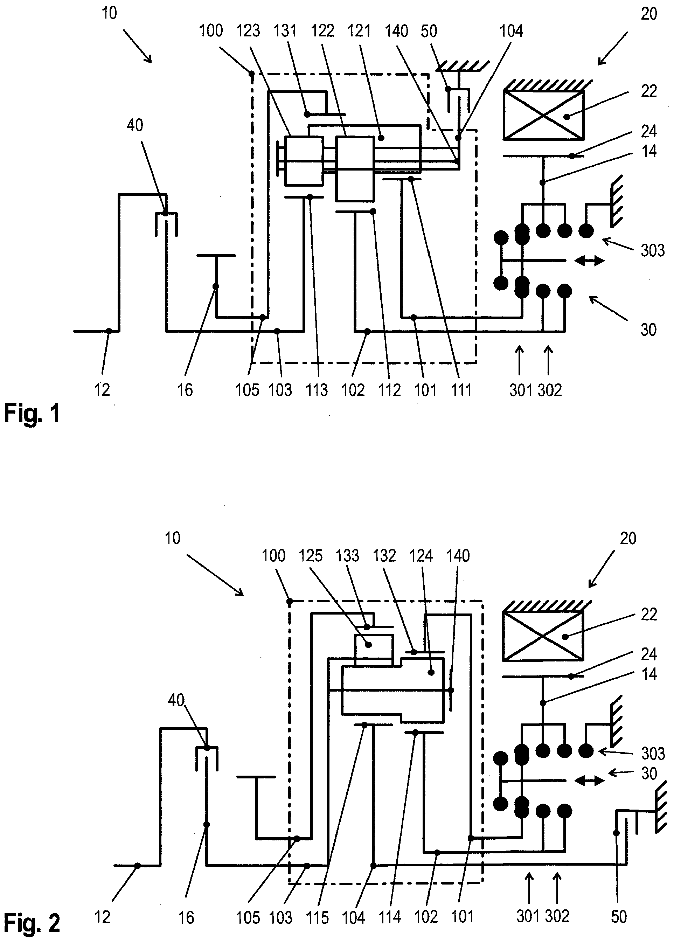

Die Figuren 1 bis 4 zeigen unterschiedliche Ausführungsformen einer erfindungsgemäßen Getriebeanordnung 10, die zunächst in ihren Gemeinsamkeiten gemeinsam erläutert werden sollen. Im Anschluss soll auf die speziellen Details der unterschiedlichen Ausführungsformen eingegangen werden.

Die Getriebeanordnung 10 dient der drehmomentübertragenden Kopplung einer nicht dargestellten Verbrennungskraftmaschine und einer elektrischen Maschine 20, umfassend einen gehäusefesten Stator 22 und einen rotierbar gelagerten Rotor 24, an einen ebenfalls nicht dargestellten Abtrieb eines Kraftfahrzeugs. Hierzu weist die Getriebeanordnung 10 eine mit der Kurbelwelle der Verbrennungskraftmaschine koppelbare Motoreingangswelle 12, eine mit dem Rotor 24 der elektrischen Maschine 20 koppelbare Elektromaschineneingangswelle 14 und eine mit dem Abtrieb koppelbare Abtriebswelle 16 auf. Das Herz der Getriebeanordnung 10 wird von einem fünfwelligen, reduzierten Planetengetriebe 100 gebildet. Die fünf Wellen des reduzierten Planetengetriebes 100 sind eine erste Eingangswelle 101, eine zweite Eingangswelle 102, eine dritte Eingangswelle 103, eine Abstützwelle 104 und eine Ausgangswelle 105. Die erste und zweite Eingangswelle 101, 102 sind über ein Multi-Schaltelement 30 mit der Elektromaschineneingangswelle 14 gekoppelt.

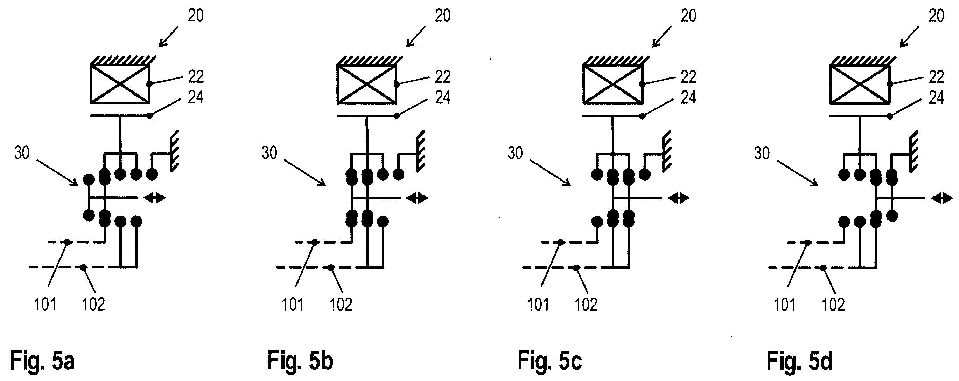

Das Multi-Schaltelement 30 vereint die Funktionen einer ersten Kupplung 301, mit welcher eine drehmomentübertragende Verbindung zwischen der ersten Eingangswelle 101 und der Elektromaschineneingangswelle 14 geöffnet und geschlossen werden kann. Einer zweiten Kupplung 302, mit der eine drehmomentübertragende Verbindung zwischen der zweiten Eingangswelle 102 und der Elektromaschineneingangswelle 14 geschlossen und geöffnet werden kann, sowie einer im Rahmen dieser Anmeldung als zweite Bremse 303 bezeichneten Bremse, mit der die Elektromaschineneingangswelle 14 am Getriebegehäuse festgelegt werden kann. Im Rahmen des Multi-Schaltelementes 30 sind nicht alle drei genannten Funktionen vollkommen unabhängig voneinander ansteuerbar. Vielmehr lassen sich bei der gezeigten Ausführungsform vier diskrete Schaltzustände sequentiell durchfahren, wie dies in Figur 5 dargestellt ist. Teilfigur 5a zeigt einen ersten Schaltzustand, der einer geschlossenen ersten Kupplung 301 und im Übrigen offenen Schaltelementen entspricht. Figur 5b zeigt eine zweite Schaltstellung, die einer geschlossenen ersten Kupplung 301, einer geschlossenen zweiten Kupplung 302 und einer offenen, zweiten Bremse 303 entspricht. Figur 5c zeigt eine Schaltstellung, die einer geöffneten ersten Kupplung 301, einer geschlossenen zweiten Kupplung 302 und einer offenen zweiten Bremse 303 entspricht. Figur 5d schließlich zeigt eine Schaltstellung, die einer geöffneten ersten Kupplung 301, einer geschlossenen Kupplung 302 und einer geschlossenen zweiten Bremse 303 entspricht.

Die dritte Eingangswelle 103 ist über die Hauptkupplung 40 mit der Motoreingangswelle 12 gekoppelt. Die Abstützwelle 104 ist über eine hier als erste Bremse 50 bezeichnete Bremse am Getriebegehäuse festlegbar. Die Ausgangswelle 105 des reduzierten Planetengetriebes 100 schließlich ist mit der Abtriebswelle der Getriebeanordnung 109 verbunden.

Die Ausführungsformen der Figuren 1 bis 5 unterscheiden sich wesentlich im konkreten Aufbau des jeweiligen reduzierten Planetengetriebes 100. Bei der Ausführungsform gemäß Figur 1 weist das Planetengetriebe 100 einen Steg 140 auf, auf dem ein Satz Langplaneten 121 sowie zwei Sätze Kurzplaneten, nämlich ein Satz erster Kurzplaneten 122 und ein Satz zweiter Kurzplaneten 123 drehbar gelagert sind. Die Kurzplaneten 122, 123 kämmen jeweils mit den Langplaneten 121. Zudem hemmen die Langplaneten 121 mit einer ersten Sonne 111, die mit der ersten Eingangswelle 101 verbunden ist. Die ersten Kurzplaneten 122 kämmen mit einer zweiten Sonne 112, die mit der zweiten Eingangswelle 102 verbunden ist. Die zweiten Kurzplaneten 123 kämmen mit einer dritten Sonne, die mit der dritten Eingangswelle 103 verbunden ist. Der Steg 140 ist mit der Abstützwelle 104 verbunden. Zudem ist ein Hohlrad 131 vorgesehen, welches mit den Langplaneten 121 kämmt und mit der Ausgangswelle 105 verbunden ist.

Bei der Ausführungsform von Figur 2 trägt der Steg 140, der mit der dritten Eingangswelle 103 verbunden ist, einen Satz Stufenplaneten 124 mit einer Planetenstufe größeren Durchmessers und einer Planetenstufe kleineren Durchmessers sowie einen Satz Kurzplaneten 125, die mit der Planetenstufe kleineren Durchmessers der Stufenplaneten 124 kämmen. Mit ihren Planetenstufen größeren Durchmessers kämmen die Stufenplaneten 124 einerseits mit einem ersten Hohlrad 132, welches mit der ersten Eingangswelle 101 verbunden ist und andererseits mit einer ersten Sonne 114, die mit der zweiten Eingangswelle 102 verbunden ist. Mit ihren Planetenstufen kleineren Durchmessers kämmen die Stufenplaneten 124 außer mit den Kurzplaneten 125 auch mit einer zweiten Sonne 115, die mit der Abstützwelle 104 verbunden ist. Die Kurzplaneten 125 kämmen außer mit der Planetenstufe kleineren Durchmessers der Stufenplaneten 124 auch mit einem zweiten Hohlrad 133, welches mit der Ausgangswelle 105 verbunden ist.

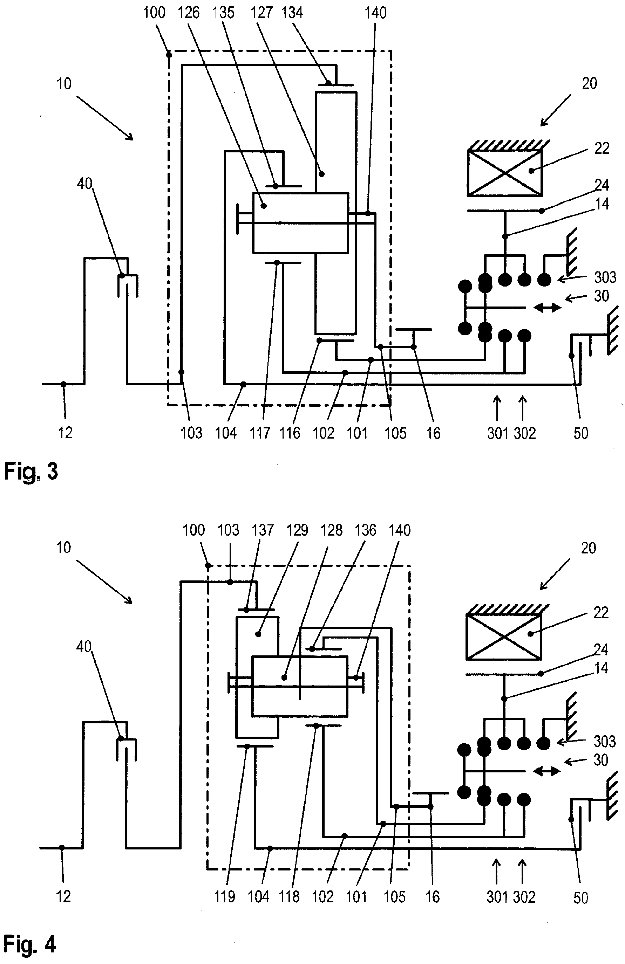

Bei der Ausführungsform von Figur 3 trägt der Steg 126, der mit der Ausgangswelle 105 verbunden ist, einen Satz Langplaneten 126 sowie einen Satz mit den Langplaneten 126 kämmender Kurzplaneten 127. Die Kurzplaneten 127 kämmen zudem mit einer ersten Sonne 116, die mit der ersten Eingangswelle 101 verbunden ist, sowie mit einem ersten Hohlrad 134, welches mit der dritten Eingangswelle 103 verbunden ist. Die Langplaneten kämmen weiter mit einer zweiten Sonne 117, die mit der zweiten Eingangswelle 102 verbunden ist, sowie mit einem zweiten Hohlrad 135, welches mit der Abstützwelle 104 verbunden ist.

Bei der Ausführungsform von Figur 4 trägt der Steg 140, der mit der Ausgangswelle 105 verbunden ist, einen Satz Langplaneten 128 und einen Satz mit den Langplaneten 128 kämmender Kurzplaneten 129. Die Langplaneten 128 kämmen zudem mit einem ersten Hohlrad 136, welches mit der ersten Eingangswelle 101 verbunden ist sowie mit einer ersten Sonne 118, die mit der zweiten Eingangswelle 102 verbunden ist. Die Kurzplaneten 129 kämmen weiter mit einem zweiten Hohlrad 137, welches mit der dritten Eingangswelle 103 verbunden ist sowie mit einer zweiten Sonne 119, die mit der Abstützwelle 104 verbunden ist.

Die mit allen vier Ausführungsformen bei sequentieller Durchfahrung der Schaltstellungen des Multi-Schaltelementes einstellbaren Betriebszustände wurden bereits im allgemeinen Teil der Beschreibung diskutiert.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

**Bezugszeichenliste**

| | | | |
|---|---|---|---|
| 10 | Getriebeanordnung | 113 | dritte Sonne |
| 12 | Motoreingangswelle von 10 | 114 | erste Sonne |
| 14 | Elektromaschineneingangswelle von 10 | 115 | zweite Sonne |
| | | 116 | erste Sonne |
| 16 | Abtriebswelle von 10 | 117 | zweite Sonne |
| 20 | elektrische Maschine | 118 | erste Sonne |
| 22 | Stator von 20 | 119 | zweite Sonne |
| 24 | Rotor von 20 | 121 | Langplanet |
| 30 | Multi-Schaltelement | 122 | erster Kurzplanet |
| 301 | (funktionale) erste Kupplung von 30 | 123 | zweiter Kurzplanet |
| | | 124 | Stufenplanet |
| 302 | (funktionale) zweite Kupplung von 30 | 125 | Kurzplanet |
| | | 126 | Langplanet |
| 303 | (funktionale) Bremse von 30, zweite Bremse | 127 | Kurzplanet |
| | | 128 | Langplanet |
| 40 | Hauptkupplung | 129 | Kurzplanet |
| 50 | erste Bremse | 131 | Hohlrad |
| 100 | reduziertes Planetengetriebe | 132 | erstes Hohlrad |
| 101 | erste Eingangswelle von 100 | 133 | zweites Hohlrad |
| 102 | zweite Eingangswelle von 100 | 134 | erstes Hohlrad |
| 103 | dritte Eingangswelle von 100 | 135 | zweites Hohlrad |
| 104 | Abstützwelle von 100 | 136 | erstes Hohlrad |
| 105 | Ausgangswelle von 100 | 137 | zweites Hohlrad |
| 111 | erste Sonne | 140 | Steg |
| 112 | zweite Sonne | | |

## Patentansprüche

1. Getriebeanordnung für ein Kraftfahrzeug, welches zwei Antriebsaggregate, nämlich eine Verbrennungskraftmaschine und eine elektrische Maschine (20) aufweist, umfassend
- ein Getriebegehäuse,
- eine mit der Kurbelwelle der Verbrennungskraftmaschine koppelbare Motoreingangswelle (12),
- eine mit dem Rotor (24) der elektrischen Maschine (20) koppelbare Elektromaschineneingangswelle (14) und
- eine mit Antriebsrädern des Kraftfahrzeugs koppelbare Abtriebswelle (16) sowie
- ein reduziertes Planetengetriebe (100) mit fünf Wellen, nämlich
• einer über eine erste Kupplung (301) mit der Elektromaschineneingangswelle (14) gekoppelten ersten Eingangswelle (101),
• einer über eine zweite Kupplung (302) mit der Elektromaschineneingangswelle (14) gekoppelten zweiten Eingangswelle (102),
• einer mit der Motoreingangswelle (12) gekoppelten dritten Eingangswelle (103),
• einer über eine erste Bremse (50) mit dem Getriebegehäuse gekoppelten Abstützwelle (104) und
• einer mit der Abtriebswelle (16) verbundenen Ausgangswelle (105),
wobei die zweite Eingangswelle (102) über eine zweite Bremse (303) mit dem Getriebegehäuse gekoppelt ist, **dadurch gekennzeichnet,**
**dass** die dritte Eingangswelle (103) mit der Motoreingangswelle (12) über eine Hauptkupplung (40) gekoppelt ist,
und **dass** die erste Kupplung (301), die zweite Kupplung (302) und die zweite Bremse (303) in einem gemeinsamen Multi-Schaltelement (30) mit vier sequentiell durchfahrbaren Schaltstellungen integriert sind,
wobei die vier Schaltstellungen bidirektional in der folgenden, funktionalen Reihenfolge durchfahrbar sind:
- erste Kupplung (301) zu, zweite Kupplung (302) offen und zweite Bremse (303) offen,
- erste Kupplung (301) zu, zweite Kupplung (302) zu und zweite Bremse (303) offen,
- erste Kupplung (301) offen, zweite Kupplung (302) zu und zweite Bremse (303) offen,
- erste Kupplung (301) offen, zweite Kupplung (302) zu und zweite Bremse (303) zu.

2. Getriebeanordnung nach dem Anspruch 1,
**dadurch gekennzeichnet,**
**dass** die erste Kupplung (301), die zweite Kupplung (302) und/oder die zweite Bremse (303) als formschlüssige Schaltelemente ausgebildet sind.

3. Getriebeanordnung nach dem Anspruch 1 oder 2,
**dadurch gekennzeichnet,**
**dass** das reduzierte Planetengetriebe (100)
- eine mit der ersten Eingangswelle (101) verbundene, erste Sonne (111),
- eine mit der zweiten Eingangswelle (102) verbundene, zweite Sonne (112),
- eine mit der dritten Eingangswelle (103) verbundene, dritte Sonne (113),
- einen mit der Abstützwelle (104) verbundenen Steg (140) und
- ein mit der Ausgangswelle (105) gekoppeltes Hohlrad (131),
aufweist,
wobei auf dem Steg (140)
- ein mit dem Hohlrad (131) und der ersten Sonne (111) kämmender Satz Langplaneten (121),
- ein mit dem Satz Langplaneten (121) und der zweiten Sonne (112) kämmender Satz erster Kurzplaneten (122) und
- ein mit dem Satz Langplaneten (121) und der dritten Sonne (113) kämmender Satz zweiter Kurzplaneten (123)
gelagert ist.

4. Getriebeanordnung nach dem Anspruch 1 oder 2,
**dadurch gekennzeichnet,**
**dass** das reduzierte Planetengetriebe (100)
- ein mit der ersten Eingangswelle (101) verbundenes, erstes Hohlrad (132),
- eine mit der zweiten Eingangswelle (102) verbundene, erste Sonne (114),
- einen mit der dritten Eingangswelle (103) verbundenen Steg (140),
- eine mit der Abstützwelle (104) verbundene, zweite Sonne (115) und
- ein mit der Ausgangswelle (105) verbundenes, zweites Hohlrad (133) aufweist,
wobei auf dem Steg (140)
- ein mit seinen kleineren Planetenstufen mit der zweiten Sonne (115) und mit seinen größeren Planetenstufen mit der ersten Sonne (114) und dem ersten Hohlrad (132) kämmender Satz Stufenplaneten (124) sowie
- ein mit den kleineren Planetenstufen des Satzes von Stufenplaneten (124) und mit dem zweiten Hohlrad (133) kämmender Satz Kurzplaneten (125)
gelagert ist.

5. Getriebeanordnung nach dem Anspruch 1 oder 2,
**dadurch gekennzeichnet,**
**dass** das reduzierte Planetengetriebe (100)
- eine mit der ersten Eingangswelle (101) verbundene, erste Sonne (116),
- eine mit der zweiten Eingangswelle (102) verbundene, zweite Sonne (117),
- ein mit der dritten Eingangswelle (103) verbundenes, erstes Hohlrad (134),
- ein mit der Abstützwelle (104) verbundenes, zweites Hohlrad (135) und
- einen mit der Ausgangswelle (105) verbundenen Steg (140)
aufweist,
wobei auf dem Steg (140)
- ein mit der zweiten Sonne (117) und dem zweiten Hohlrad (135) kämmender Satz Langplaneten (126) und
- ein mit dem Satz Langplaneten (126) sowie mit der ersten Sonne (116) und dem ersten Hohlrad (134) kämmender Satz Kurzplaneten (127)
gelagert ist.

6. Getriebeanordnung nach dem Anspruch 1 oder 2,
**dadurch gekennzeichnet,**
**dass** das reduzierte Planetengetriebe (100)
- ein mit der ersten Eingangswelle (101) verbundenes, erstes Hohlrad (136),
- eine mit der zweiten Eingangswelle (102) verbundene, erste Sonne (118),
- ein mit der dritten Eingangswelle (103) verbundenes, zweites Hohlrad (137),
- eine mit der Abstützwelle verbundene, zweite Sonne (119) und
- einen mit der Ausgangswelle verbundenen Steg (140)
aufweist,
wobei auf dem Steg (140)
- ein mit der ersten Sonne (118) und dem ersten Hohlrad (136) kämmender Satz Langplaneten (128) und
- ein mit dem Satz Langplaneten (128) sowie mit der zweiten Sonne (119) und dem zweiten Hohlrad (137) kämmender Satz Kurzplaneten (129)
gelagert ist.

## Claims

1. Transmission arrangement for a motor vehicle which has two drive assemblies, namely an internal combustion engine and an electric machine (20), comprising
- a transmission housing,
- an engine input shaft (12) which can be coupled to the crankshaft of the internal combustion engine,
- an electric machine input shaft (14) which can be coupled to the rotor (24) of the electric machine (20), and
- a driven shaft (16) which can be coupled to drive wheels of the motor vehicle, and
- a reduced planetary gear mechanism (100) with five shafts, namely
• a first input shaft (101) which is coupled via a first clutch (301) to the electric machine input shaft (14),
• a second input shaft (102) which is coupled via a second clutch (302) to the electric machine input shaft (14),
• a third input shaft (103) which is coupled to the engine input shaft (12),
• a supporting shaft (104) which is connected via a first brake (50) to the transmission housing, and
• an output shaft (105) which is connected to the driven shaft (16),
the second input shaft (102) being connected via a second brake (303) to the transmission housing, **characterized**
**in that** the third input shaft (103) is coupled to the engine input shaft (12) via a main clutch (40),
and **in that** the first clutch (301), the second clutch (302) and the second brake (303) are integrated into a common multiple shifting element (30) with four shifting positions which can be moved through sequentially,
it being possible to move through the four shifting positions bidirectionally in the following, functional sequence:
- first clutch (301) closed, second clutch (302) open and second brake (303) open,
- first clutch (301) closed, second clutch (302) closed and second brake (303) open,
- first clutch (301) open, second clutch (302) closed and second brake (303) open,
- first clutch (301) open, second clutch (302) closed and second brake (303) closed.

2. Transmission arrangement according to Claim 1, **characterized in that** the first clutch (301), the second clutch (302) and/or the second brake (303) are/is configured as positively locking shifting elements.

3. Transmission arrangement according to Claim 1 or 2, **characterized in that** the reduced planetary gear mechanism (100) has
- a first sun (111) which is connected to the first input shaft (101),
- a second sun (112) which is connected to the second input shaft (102),
- a third sun (113) which is connected to the third input shaft (103),
- a spider (140) which is connected to the supporting shaft (104), and
- an internal gear (131) which is coupled to the output shaft (105),
- a set of long planets (121) which meshes with the internal gear (131) and the first sun (111),
- a set of first short planets (122) which meshes with the set of long planets (121) and the second sun (112), and
- a set of second short planets (123) which meshes with the set of long planets (121) and the third Sun (113)
being mounted on the spider (140).

4. Transmission arrangement according to Claim 1 or 2, **characterized in that** the reduced planetary gear mechanism (100) has
- a first internal gear (132) which is connected to the first input shaft (101),
- a first sun (114) which is connected to the second input shaft (102),
- a spider (140) which is connected to the third input shaft (103),
- a second sun (115) which is connected to the supporting shaft (104), and
- a second internal gear (133) which is connected to the output shaft (105),
- a set of multi-step planets (124) which meshes by way of its smaller planetary steps with the second sun (115) and by way of its larger planetary steps with the first sun (114) and the first internal gear (132), and
- a set of short planets (125) which meshes with the smaller planetary steps of the set of multi-step planets (124) and with the second internal gear (133)
being mounted on the spider (140).

5. Transmission arrangement according to Claim 1 or 2, **characterized in that** the reduced planetary gear mechanism (100) has
- a first sun (116) which is connected to the first input shaft (101),
- a second sun (117) which is connected to the second input shaft (102),
- a first internal gear (134) which is connected to the third input shaft (103),
- a second internal gear (135) which is connected to the supporting shaft (104), and
- a spider (140) which is connected to the output shaft (105),
- a set of long planets (126) which meshes with the second sun (117) and the second internal gear (135), and
- a set of short planets (127) which meshes with the set of long planets (126) and with the first sun (116) and the first internal gear (134)
being mounted on the spider (140).

6. Transmission arrangement according to Claim 1 or 2, **characterized in that** the reduced planetary gear mechanism (100) has
- a first internal gear (136) which is connected to the first input shaft (101),
- a first sun (118) which is connected to the second input shaft (102),
- a second internal gear (137) which is connected to the third input shaft (103),
- a second sun (119) which is connected to the supporting shaft, and
- a spider (140) which is connected to the output shaft,
- a set of long planets (128) which meshes with the first sun (118) and the first internal gear (136), and
- a set of short planets (129) which meshes with the set of long planets (128) and with the second sun (119) and the second internal gear (137)
being mounted on the spider (140).

## Revendications

1. Système de transmission pour un véhicule automobile qui présente deux groupes motopropulseurs, à savoir un moteur à combustion interne et une machine électrique (20), comprenant
- un boîtier de transmission,
- un arbre d'entrée de moteur (12) pouvant être accouplé au vilebrequin du moteur à combustion interne,
- un arbre d'entrée de machine électrique (14) pouvant être accouplé au rotor (24) de la machine électrique (20), et
- un arbre de prise de force (16) pouvant être accouplé aux roues motrices du véhicule automobile ainsi
- qu'une transmission planétaire à réduction (100) avec cinq arbres, à savoir
- un premier arbre d'entrée (101) accouplé par le biais d'un premier embrayage (301) à l'arbre d'entrée de machine électrique (14),
- un deuxième arbre d'entrée (102) accouplé par le biais d'un deuxième embrayage (302) à l'arbre d'entrée de machine électrique (14),
- un troisième arbre d'entrée (103) accouplé à l'arbre d'entrée de moteur (12),
- un arbre de support (104) accouplé par le biais d'un premier frein (50) au boîtier de transmission et
- un arbre de sortie (105) connecté à l'arbre de prise de force (16),
le deuxième arbre d'entrée (102) étant accouplé par le biais d'un deuxième frein (303) au boîtier de transmission, **caractérisé en ce que** le troisième arbre d'entrée (103) est accouplé à l'arbre d'entrée de moteur (12) par le biais d'un embrayage principal (40),
et **en ce que** le premier embrayage (301), le deuxième embrayage (302) et le deuxième frein (303) sont intégrés dans un élément de commutation multiple commun (30) ayant quatre positions de commutation pouvant être passées séquentiellement, les quatre positions de commutation pouvant être passées dans les deux sens dans la séquence fonctionnelle suivante :
- premier embrayage (301) fermé, deuxième embrayage (302) ouvert et deuxième frein (303) ouvert,
- premier embrayage (301) fermé, deuxième embrayage (302) fermé et deuxième frein (303) ouvert,
- premier embrayage (301) ouvert, deuxième embrayage (302) fermé et deuxième frein (303) ouvert,
- premier embrayage (301) ouvert, deuxième embrayage (302) fermé et deuxième frein (303) fermé.

2. Système de transmission selon la revendication 1,
**caractérisé en ce que**
le premier embrayage (301), le deuxième embrayage (302) et/ou le deuxième frein (303) sont réalisés sous forme d'éléments de commutation à engagement par correspondance géométrique.

3. Système de transmission selon la revendication 1 ou 2,
**caractérisé en ce que**
la transmission planétaire à réduction (100) présente
- une première roue solaire (111) connectée au premier arbre d'entrée (101),
- une deuxième roue solaire (112) connectée au deuxième arbre d'entrée (102),
- une troisième roue solaire (113) connectée au troisième arbre d'entrée (103),
- un porte-satellites (140) connecté à l'arbre de support (104) et
- une couronne dentée (131) accouplée à l'arbre de sortie (105),
sur le porte-satellites (140) étant supportés
- un jeu de satellites longs (121) s'engrenant avec la couronne dentée (131) et la première roue solaire (111),
- un jeu de premiers satellites courts (122) s'engrenant avec le jeu de satellites longs (121) et la deuxième roue solaire (112) et
- un jeu de deuxièmes satellites courts (123) s'engrenant avec le jeu de satellites longs (121) et la troisième roue solaire (113).

4. Système transmission selon la revendication 1 ou 2,
**caractérisé en ce que**
la transmission planétaire à réduction (100) présente
- une première couronne dentée (132) connectée au premier arbre d'entrée (101),
- une première roue solaire (114) connectée au deuxième arbre d'entrée (102),
- un porte-satellites (140) connecté au troisième arbre d'entrée (103),
- une deuxième roue solaire (115) connectée à l'arbre de support (104) et
- une deuxième couronne dentée (133) connectée à l'arbre de sortie (105),
sur le porte-satellites (140) étant supportés
- un jeu de satellites étagés (124) s'engrenant avec ses étages de satellites plus petits avec la deuxième roue solaire (115) et avec ses étages de satellites plus grands avec la première roue solaire (114) et la première couronne dentée (132) ainsi
- qu'un jeu de satellites courts (125) s'engrenant avec les étages de satellites plus petits du jeu de satellites étagés (124) et avec la deuxième couronne dentée (133).

5. Système de transmission selon la revendication 1 ou 2,
**caractérisé en ce que**
la transmission planétaire à réduction (100) présente
- une première roue solaire (116) connectée au premier arbre d'entrée (101),
- une deuxième roue solaire (117) connectée au deuxième arbre d'entrée (102),
- une première couronne dentée (134) connectée au troisième arbre d'entrée (103),
- une deuxième couronne dentée (135) connectée à l'arbre de support (104) et
- un porte-satellites (140) connecté à l'arbre de sortie (105),
sur le porte-satellites (140) étant supportés
- un jeu de satellites longs (126) s'engrenant avec la deuxième roue solaire (117) et la deuxième couronne dentée (135), et
- un jeu de satellites courts (127) s'engrenant avec le jeu de satellites longs (126) et avec la première roue solaire (116) et la première couronne dentée (134).

6. Système de transmission selon la revendication 1 ou 2,
**caractérisé en ce que**
la transmission planétaire à réduction (100) présente
- une première couronne dentée (136) connectée au premier arbre d'entrée (101),
- une première roue solaire (118) connectée au deuxième arbre d'entrée (102),
- une deuxième couronne dentée (137) connectée au troisième arbre d'entrée (103),
- une deuxième roue solaire (119) connectée à l'arbre de support, et
- un porte-satellites (140) connecté à l'arbre de sortie,
sur le porte-satellites (140) étant supportés
- un jeu de satellites longs (128) s'engrenant avec la première roue solaire (118) et la première couronne dentée (136), et
- un jeu de satellites courts (129) s'engrenant avec le jeu de satellites longs (128) et avec la deuxième roue solaire (119) et la deuxième couronne dentée (137).
